# EUROPEAN PATENT APPLICATION

(11) **EP 2 463 126 A1**
(43) Date of publication of application: **13.06.2012**
(21) Application number: 10806258.9
(22) Date of filing: 06.08.2010
(51) Int. Cl.: B60G 17/015, B60G 3/14, B60G 3/20, B60G 7/00, B60G 7/02

(54) **VEHICLE**

(30) Priority: 07.08.2009 JP 2009184291; 05.08.2010 JP 2010176311
(71) Applicant: Equos Research Co., Ltd., Chiyoda-ku Tokyo 101-0021 (JP)
(72) Inventor: SAKAKIBARA, Fumihiko, Tokyo 101-0021 (JP); HORIGUCHI, Munehisa, Tokyo 101-0021 (JP); MIZUNO, Akira, Tokyo 101-0021 (JP)
(74) Representative: TBK
(86) International application number: PCT/JP2010/004980
(87) International publication number: WO 2011/016258

(57) **Abstract**

[Problem to be Solved] To provide a vehicle that can easily turn during turning.

[Solution] A vehicle 1 including a vehicle body 2, a wheel 3 supported by the vehicle body 2, and a camber angle changing device 4, having a first side portion supported on a vehicle body side member and a second side portion supported on a wheel side member, for allowing the wheel side member to rotate about a camber axis C relative to the vehicle body member, is **characterized in that** the camber axis extends generally in parallel with the road surface when the vehicle is running steadily and the camber axis of an outside turning wheel is inclined such that the front of the camber axis is positioned below the rear thereof when the vehicle 1 is turning.

## Description

### Technical Field

The present invention relates to a vehicle in which the camber angles of the wheels can be adjusted.

### Background Art

Conventionally, a device including a ball joint that supports an axle supporting a wheel on the vehicle body at one point, first and second actuators for supporting the axle at two points located above or below the point at which the axle is supported by the ball joint and spaced apart in the longitudinal direction of the vehicle, and displacing the two supporting points individually in the vehicle width direction, and control means for controlling the first and second actuators to displace the two supporting points relative to each other in the vehicle width direction in order to change the toe of the wheel and/or to displace the two supporting points in one of the vehicle width directions in order to change the camber of the wheel has been disclosed (Patent Document 1).

### Related Art Document

### Patent Document

Patent Document 1: Japanese Patent Application Publication No. 2004-122932 (JP 2004-122932 A)

### Disclosure of the Invention

### Problem to be Solved by the Invention

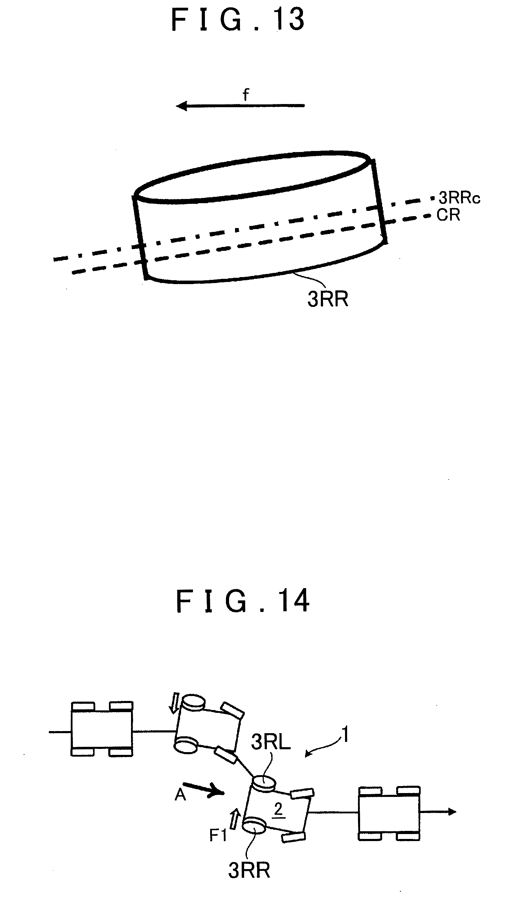

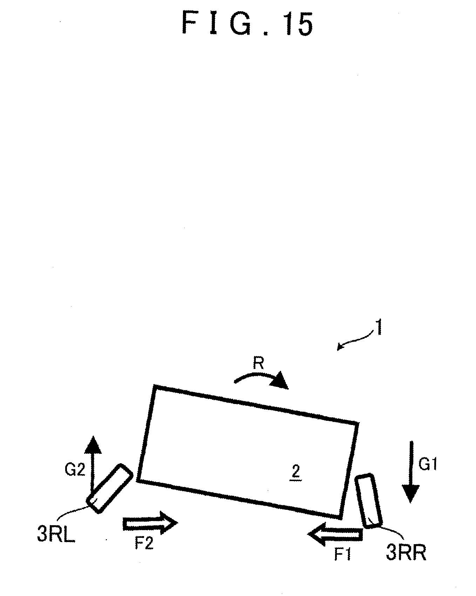

FIG. 14 is a diagram illustrating a vehicle during turning, and FIG. 15 is a diagram illustrating the vehicle as viewed in the direction of the arrow A in FIG. 14. With a related art, when a vehicle 1 as shown in FIG. 14 is turning, an outer side of the vehicle 1 during turning receives a downward load G1 and an inner side of the vehicle during turning receives an upward load G2 because of the roll R as shown FIG. 15. Therefore, the vehicle body 2 is tilted with an outer side of the vehicle body 2 being forced downward and an inner side of the vehicle body 2 being raised upward. Thus, when the camber angle of the wheels 3 is adjusted to a negative camber, a first lateral force F1 acting toward the inner side while the vehicle 1 is turning is applied to the outside turning wheel 3RR whereas a second lateral force F2 acting toward the outer side while the vehicle is turning is applied to the inside turning wheel 3RL, and the first lateral force F2 and the second lateral force F2 act to cancel each other, making it difficult to improve the turning performance significantly.

It is, therefore, an object of the present invention to solve the above problem and provide a vehicle which can easily turn during turning.

### Means for Solving the Problem

For the purpose of accomplishing the above object, a vehicle of the present invention includes a vehicle body, a wheel supported by the vehicle body, and a camber angle changing device, having a first side portion supported on a vehicle body side member and a second side portion supported on a wheel side member, for allowing the wheel side member to rotate about a camber axis relative to the vehicle body side member, and is **characterized in that** the camber axis extends generally in parallel with the road surface when the vehicle is running steadily and the camber axis of an outside turning wheel is inclined such that the front of the camber axis is positioned below the rear thereof when the vehicle is turning.

The vehicle is also **characterized in that** the camber axis of an inside turning wheel is inclined such that the front of the camber axis is positioned above the rear thereof when the vehicle is turning.

The vehicle is characterized by further including a trailing arm having a first end coupled to the vehicle body and a second end supporting the camber angle changing device at a position on the rear side of the first end.

The vehicle is characterized by further including a first arm having a first end coupled to the vehicle body side member at a position on the front side of the vehicle body with respect to the wheel and a second end supporting the camber angle changing device, a second arm having a first end coupled to the vehicle body side member at a position on the rear side of the vehicle body with respect to the wheel and a second end supporting the camber angle changing device, a low-rigidity first shock-absorbing member coupling the first end of the first arm to the vehicle body, and a second shock-absorbing member coupling the first end of the second arm to the vehicle body and having a higher rigidity than the first shock-absorbing member.

### Effect of the Invention

According to the invention described in Claim 1, in a vehicle including a vehicle body, a wheel supported by the vehicle body, and a camber angle changing device, having a first side portion supported on a vehicle body side member and a second side portion supported on a wheel side member, for allowing the wheel side member to rotate about a camber axis relative to the vehicle body member, the camber axis extends generally in parallel with the road surface when the vehicle is running steadily and the camber axis of an outside turning wheel is inclined such that the front of the camber axis is positioned below the rear thereof when the vehicle is turning. Thus, when the camber angle of the wheel is adjusted to a negative camber by the camber angle changing device, a toe angle which generates a lateral force that pushes the vehicle toward the inner side while the vehicle is turning is imparted to the outside turning wheel. It is, therefore, possible to provide a vehicle which can easily turn during turning.

According to the invention described in Claim 2, the camber axis of an inside turning wheel is inclined such that the front of the camber axis is positioned above the rear thereof when the vehicle is turning. Thus, when the camber angle of the wheel is adjusted to a negative camber by the camber angle changing device, a toe angle which generates a lateral force that pushes the vehicle toward the inner side while the vehicle is turning is imparted to the inside turning wheel. It is, therefore, possible to provide a vehicle which can turn more easily during turning.

According to the invention described in Claim 3, because a trailing arm having a first end coupled to the vehicle body and a second end supporting the camber angle changing device at a position in the rear side of the first end is provided, the camber axis of the outside turning wheel can be inclined, with a simple structure, such that the front of the camber axis is positioned below the rear thereof when the vehicle is turning. In addition, the camber axis of the inside turning wheel can be inclined, with a simple structure, such that the front of the camber axis is positioned above the rear thereof when the vehicle is turning.

According to the invention described in Claim 4, a first arm having a first end coupled to the vehicle body side member at a position on the front side of the vehicle body with respect to the wheel and a second end supporting the camber angle changing device, a second arm having a first end coupled to the vehicle body side member at a position on the rear side of the vehicle body with respect to the wheel and a second end supporting the camber angle changing device, a low-rigidity first shock-absorbing member coupling the first end of the first arm to the vehicle body, and a second shock-absorbing member coupling the first end of the second arm to the vehicle body and having a higher rigidity than the first shock-absorbing member are provided, the camber axis of the outside turning wheel can be inclined, with a simple structure, such that the front of the camber axis is positioned below the rear thereof when the vehicle is turning. In addition, the camber axis of the inside turning wheel can be inclined, with a simple structure, such that the front of the camber axis is positioned above the rear thereof when the vehicle is turning.

### Brief Description of Drawings

[FIG. 1] FIG. 1 is a schematic view schematically illustrating an outside wheel in an embodiment of the present invention.
[FIG. 2] FIG. 2 is a plan view of FIG. 1.
[FIG. 3] FIG. 3 is a schematic view schematically illustrating an inside wheel in an embodiment of the present invention.
[FIG. 4] FIG. 4 is a plan view of FIG. 3.
[FIG. 5] FIG. 5 is a schematic view illustrating the state of a vehicle of an embodiment of the present invention during turning as viewed from the rear of the vehicle.
[FIG. 6] FIG. 6 is a diagram illustrating a first embodiment of the present invention.
[FIG. 7] FIG. 7 is a diagram illustrating an outside turning wheel in the first embodiment of the present invention.
[FIG. 8] FIG. 8 is a diagram illustrating an inside turning wheel in the first embodiment of the present invention.
[FIG. 9] FIG. 9 is a diagram illustrating a second embodiment of the present invention.
[FIG. 10] FIG. 10 is a diagram illustrating an outside turning wheel in the second embodiment of the present invention.
[FIG. 11] FIG. 11 is a diagram illustrating an inside turning wheel in the second embodiment of the present invention.
[FIG. 12] FIG. 12 is a schematic view illustrating another embodiment.
[FIG. 13] FIG. 13 is a schematic view illustrating another embodiment.
[FIG. 14] FIG. 14 is a diagram illustrating the state of a vehicle during turning.
[FIG. 15] FIG. 15 is a schematic view illustrating the state of a conventional vehicle during turning as viewed from the rear of the vehicle.

### Best Mode for Carrying Out the Invention

Preferred embodiments of a vehicle wheel support structure according to the present invention will be described with reference to the drawings. It should be noted that, in the embodiments, the term "front" means not the front half of the vehicle body but the side of the headlights (the side toward which the vehicle advances) with respect to an object, and the term "rear" means the opposite side. It also should be noted that, in the embodiments, when one thing is above another, it may not be necessarily be directly above the other thing and it only has to be vertically above the horizontal plane on which the other thing lies and that when one thing is below another, it may not necessarily be directly below the other thing and it only has to be vertically below the horizontal plane on which the other thing lies.

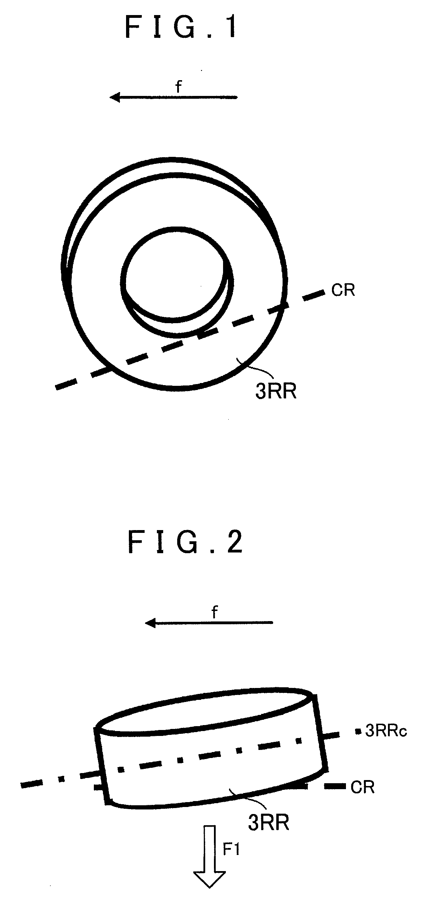

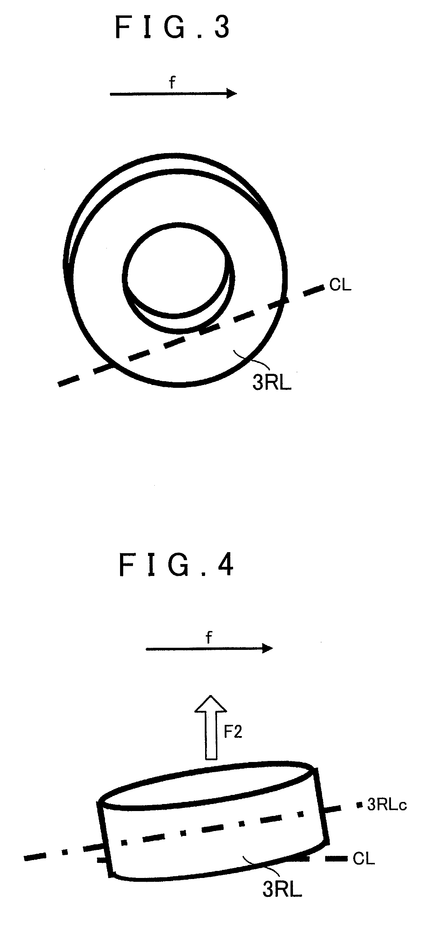

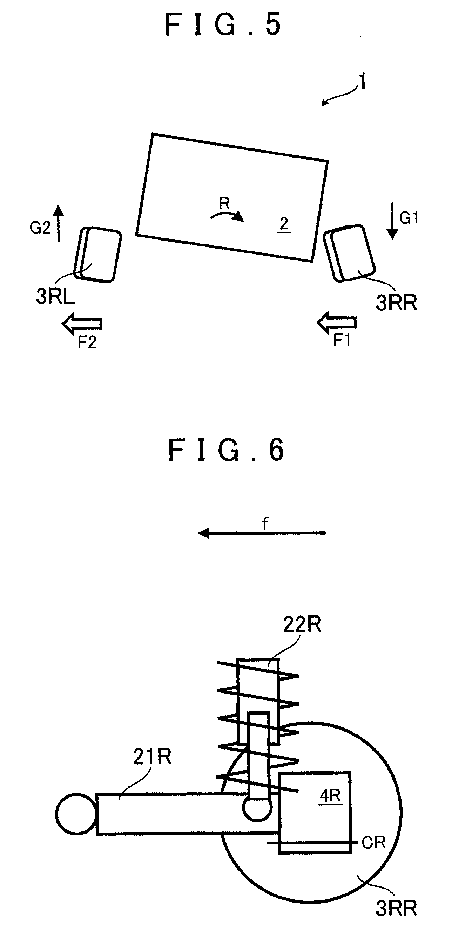

FIG. 1 is a diagram illustrating an outside turning wheel in an embodiment of the present invention, FIG. 2 is a plan view of FIG. 1, FIG. 3 is a diagram illustrating an inside turning wheel in an embodiment of the present invention, FIG. 4 is a plan view of FIG. 3, and FIG. 5 is a schematic view illustrating the state of a vehicle during turning as viewed from the rear of the vehicle. The state of the vehicle during turning in each diagram is that as viewed in the direction of arrow A in FIG. 14. The arrow f in each drawing indicates the direction in which the vehicle is traveling (forward direction).

FIG. 1 is a diagram illustrating an outside turning wheel 3RR as viewed from the side of the widthwise centerline of a vehicle 1. In an embodiment of a vehicle according to the present invention, the vehicle includes a vehicle body 2, a wheel 3 supported by the vehicle body 2, and a camber angle changing device 4 having a first side portion supported on a vehicle body side member and a second side portion supported on a wheel side member, the first side portion supported on the vehicle body side member being rotatable about a first camber axis CR relative to the second side portion supported on the wheel side member, and is configured such that the first camber axis CR extends generally in parallel with the road surface when the vehicle is running steadily and the first camber axis CR of an outside turning wheel 3RR is inclined such that the front of the first camber axis CR in the traveling direction f is positioned below the rear thereof when the vehicle is turning.

The term "vehicle body side member" used herein refers to the vehicle body 2 or a member supported by the vehicle body 2, and the term "wheel side member" used herein refers to a member that rotatably supports the wheel (tire and wheel). The phrase "the vehicle is running steadily" means that the vehicle is traveling straight on a flat road.

This configuration utilizes the fact that the vehicle body 2 is tilted with an outer side of the vehicle 1 during turning being forced downward because the outer side of the vehicle 1 during turning receives a downward load G1 and an inner side of the vehicle 1 during turning receives an upward load G2 because of the roll R as shown in FIG. 5.

As described above, the first camber axis CR extends generally in parallel with the road surface when the vehicle 1 is running steadily and the first camber axis CR of the outside turning wheel 3RR is inclined such that the front of the first camber axis CR in the traveling direction f is positioned below the rear thereof when the vehicle is turning. Thus, as shown in FIG. 2, when a camber angle is imparted to the outside turning wheel 3RR, a toe angle is also imparted thereto. As a result, a lateral force F1 that pushes the vehicle 1 toward the inner side while the vehicle 1 is turning is generated because of the camber angle and the toe angle. In the drawing, reference numeral 3RRc indicates the widthwise centerline of the outside turning wheel 3RR.

FIG. 3 is a diagram illustrating an inside turning wheel 3RL as viewed from the side of the widthwise centerline of the vehicle 1. In the embodiment of the wheel support structure according to the present invention, the front of a second camber axis CL of the inside turning wheel 3RL in the traveling direction f is positioned above the rear thereof when the vehicle is turning.

This configuration utilizes the fact that the vehicle body 2 is tilted with the inner side of the vehicle 1 during turning being raised upward because the outer side of the vehicle 1 during turning receives a downward load G1 and the inner side of the vehicle 1 during turning receives an upward load G2 because of the roll R as shown in FIG. 5.

As described above, the second camber axis CL extends generally in parallel with the road surface when the vehicle 1 is running steadily and the second camber axis CL of the inside turning wheel 3RL is inclined such that the front of the second camber axis CL in the traveling direction f is positioned above the rear thereof when the vehicle is turning. Thus, as shown in FIG. 4, when a camber angle is imparted to the inside turning wheel 3RL, a toe angle is also imparted thereto. As a result, a lateral force F2 that pushes the vehicle 1 toward the inner side while the vehicle 1 is turning, which is the difference between the lateral force due to the toe angle and the lateral force due to the camber angle, is generated. In the drawing, reference numeral 3RLc indicates the widthwise centerline of the inside turning wheel 3RL.

Thus, in the vehicle of this embodiment, the lateral forces F1 and F2, which push the vehicle 1 toward the inner side while the vehicle 1 is turning, are applied to the outside turning wheel 3RR and the inside turning wheel 3RL, respectively, as shown in FIG. 5. The vehicle can, therefore, easily turn during turning. The constant presence of a toe angle leads to the problem of an increase in travel resistance. However, when a toe angle is imparted only when the load is changed because of the roll during turning as in this embodiment of the present invention, the turning performance can be improved without increasing the travel resistance. When the turn direction is opposite, the outside turning wheel 3RR and the inside turning wheel 3RL change their places.

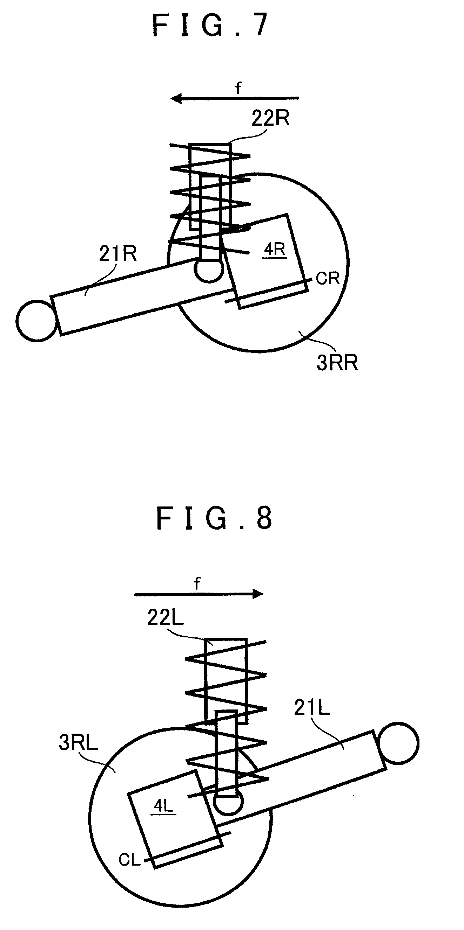

A first embodiment will be next described. FIG. 6 is a diagram illustrating a first embodiment of the present invention, FIG. 7 is a diagram illustrating an outside turning wheel in the first embodiment of the present invention, and FIG. 8 is a diagram illustrating an inside turning wheel in the first embodiment of the present invention.

FIG. 6 is a diagram illustrating the normal state of the outside turning wheel 3RR among wheels 3 in the first embodiment. As shown in FIG. 6, a wheel support structure for the outside turning wheel 3RR of the first embodiment includes a first trailing arm 21R having a first end rotatably coupled to the vehicle body 2 and a second end coupled to an outside turning wheel 3RR side via a first camber angle changing device 4R, a first strut suspension 22R having a first end coupled to the vehicle body 2 and a second end coupled to the first trailing arm 21R, and the first camber angle changing device 4R, which has a first side portion supported by the first trailing arm 21 R and a second side portion coupled to the outside turning wheel 3RR, for rotating the outside turning wheel 3RR about a first camber axis CR.

FIG. 7 is a diagram illustrating the state of the outside turning wheel 3RR during turning. When the vehicle 1 is turning, the vehicle body 2 is tilted with the outer side of the vehicle 1 during turning being forced downward and the inner side of the vehicle 1 during turning being raised upward because the outer side of the vehicle 1 during turning receives a downward load G1 and the inner side of the vehicle 1 during turning receives an upward load G2 because of the roll R of the vehicle 1 as shown in FIG. 5. Thus, because the first end of the first trailing arm 21R coupled to the vehicle body 2 is pulled down, the front of the first camber axis CR of the outside turning wheel 3RR in the traveling direction f is positioned below the rear thereof.

As described above, the first camber axis CR extends generally in parallel with the road surface when the vehicle 1 is running steadily and the first camber axis CR of the outside turning wheel 3RR is inclined such that the front of the first camber axis CR in the traveling direction f is positioned below the rear thereof when the vehicle is turning. Thus, as shown in FIG. 2, when a camber angle is imparted to the outside turning wheel 3RR, a toe angle is also imparted thereto. As a result, a lateral force F1 that pushes the vehicle 1 toward the inner side while the vehicle 1 is turning is generated because of the camber angle and the toe angle.

FIG. 8 is a diagram illustrating the state of the inside turning wheel 3RL during turning. The wheel support structure for the inside turning wheel 3RL of the first embodiment includes a second trailing arm 21 L having a first end rotatably coupled to the vehicle body 2 and a second end coupled to the inside turning wheel 3RL side via a second camber angle changing device 4L, a second strut suspension 22L having a first end coupled to the vehicle body 2 and a second end coupled to the second trailing arm 21L, and the second camber angle changing device 4L, which has a first side portion supported by the second trailing arm 21L and a second side portion coupled to the inside turning wheel 3RL, for rotating the inside turning wheel 3RL about a second camber axis CL.

When the vehicle 1 is turning, the vehicle body 2 is tilted with the outer side of the vehicle 1 during turning being forced downward and the inner side of the vehicle 1 during turning being raised upward because the outer side of the vehicle 1 during turning receives a downward load G1 and the inner side of the vehicle 1 during turning receives an upward load G2 because of the roll R of the vehicle as shown in FIG. 5. Thus, because the first end of the second trailing arm 21L coupled to the vehicle body 2 is pulled up, the front of the second camber axis CL of the inside turning wheel 3RL in the traveling direction f is positioned above the rear thereof.

As described above, the second camber axis CL extends generally in parallel with the road surface when the vehicle 1 is running steadily and the second camber axis CL of the inside turning wheel 3RL is inclined such that the front of the second camber axis CL in the traveling direction f is positioned above the rear thereof when the vehicle is turning. Thus, as shown in FIG. 4, when a camber angle is imparted to the inside turning wheel 3RL, a toe angle is also imparted thereto. As a result, a lateral force F2 that pushes the vehicle 1 toward the inner side while the vehicle 1 is turning, which is the difference between the lateral force due to the toe angle and the lateral force due to the camber angle, is generated.

Thus, in the vehicle of this embodiment, the lateral forces F1 and F2, which push the vehicle 1 toward the inner side while the vehicle 1 is turning, are applied to the outside turning wheel 3RR and the inside turning wheel 3RL, respectively, as shown in FIG. 5. The vehicle can, therefore, easily turn during turning. The constant presence of a toe angle leads to the problem of an increase in travel resistance. However, when a toe angle is imparted only when the load is changed because of the roll during turning as in the first embodiment, the turning performance can be improved without increasing the travel resistance. When the turn direction is opposite, the outside turning wheel 3RR and the inside turning wheel 3RL change their places.

In addition, because the trailing arm 21 having a first end coupled to the vehicle body 2 and a second end supporting the camber angle changing device 4 at a position in the rear side of the first end is provided, the first camber axis CR of the outside turning wheel 3RR can be inclined, with a simple structure, such that the front of the first camber axis CR is positioned below the rear thereof when the vehicle is turning. In addition, the second camber axis CL of the inside turning wheel 3RL can be inclined, with a simple structure, such that the front of the second camber axis CL is positioned above the rear thereof when the vehicle is turning.

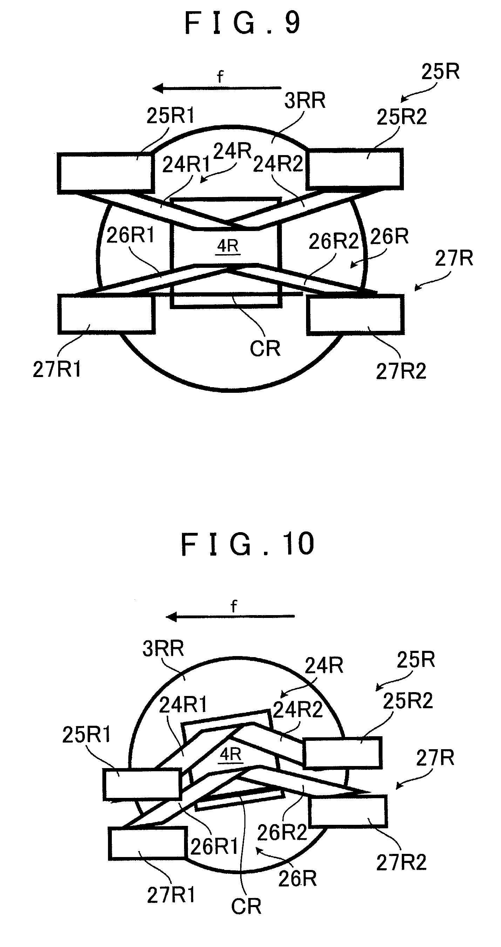

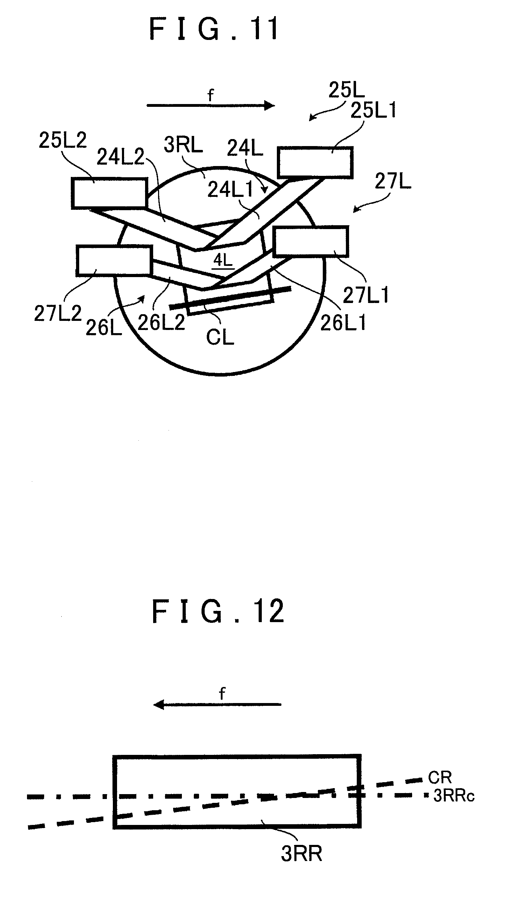

A second embodiment will be next described. FIG. 9 is a diagram illustrating a second embodiment of the present invention, FIG. 10 is a diagram illustrating an outside turning wheel in the second embodiment of the present invention, and FIG. 11 is a diagram illustrating an inside turning wheel in the second embodiment of the present invention.

FIG. 9 is a diagram illustrating the normal state of an outside turning wheel 3RR among wheels 3 in the second embodiment. As shown in FIG. 9, the wheel support structure for the outside turning wheel 3RR of the second embodiment is a double wishbone type suspension, and includes a first upper arm 24R1 as a first arm having a first end coupled to the vehicle body 2 via a first upper bush 25R1 as a low-rigidity first shock-absorbing member and a second end coupled to the outside turning wheel 3RR side via a first camber angle changing device 4R, a second upper arm 24R2 as a second arm having a first end coupled to the vehicle body 2 via a second upper bush 25R2 as a high-rigidity second shock-absorbing member and a second end coupled to the outside turning wheel 3RR side via the first camber angle changing device 4R, a first lower arm 26R1 as a first arm having a first end coupled to the vehicle body 2 via a first lower bush 27R1 as a low-rigidity first shock-absorbing member and a second end coupled to the outside turning wheel 3RR side via the first camber angle changing device 4R, a second lower arm 26R2 as a second arm having a first end coupled to the vehicle body 2 via a second lower bush 27R2 as a high-rigidity second shock-absorbing member and a second end coupled to the outside turning wheel 3RR side via the first camber angle changing device 4R, and the first camber angle changing device 4R, which has a first side portion supported by the upper arms 24R and the lower arms 26R and a second side portion coupled to a support member that rotatably supports the outside turning wheel 3RR, for rotating the outside turning wheel 3RR about a first camber axis CR.

FIG. 10 is a diagram illustrating the state of the outside turning wheel 3RR while the vehicle is turning. When the vehicle 1 is turning, the vehicle body 2 is tilted with the outer side of the vehicle 1 during turning being forced downward and the inner side of the vehicle 1 during turning being raised upward because the outer side of the vehicle 1 during turning receives a downward load G1 and the inner side of the vehicle 1 during turning receives an upward load G2 because of the roll R of the vehicle 1 as shown in FIG. 5.

Then, of the upper arms 24R of the wheel support structure for the outside turning wheel 3RR, the first upper arm 24R1 coupled to the low-rigidity first upper bush 25R1 of the upper arms 24R coupled to the vehicle body 2 is pulled down to a position below the second upper arm 24R2 coupled to the high-rigidity second upper bush 25R2. Of the lower arms 26R of the wheel support structure for the outside turning wheel 3RR, the first lower arm 26R1 coupled to the low-rigidity first lower bush 27R1 of the lower arms 26R coupled to the vehicle body 2 is pulled down to a position below the second lower arm 26R2 coupled to the high-rigidity second lower bush 27R2.

Thus, the front of the first camber axis CR of the outside turning wheel 3RR in the traveling direction f is positioned below the rear thereof.

As described above, the first camber axis CR extends generally in parallel with the road surface when the vehicle 1 is running steadily and the first camber axis CR of the outside turning wheel 3RR is inclined such that the front of the first camber axis CR in the traveling direction f is positioned below the rear thereof when the vehicle is turning. Thus, as shown in FIG. 2, when a camber angle is imparted to the outside turning wheel 3RR, a toe angle is also imparted thereto. As a result, a lateral force F1 that pushes the vehicle 1 toward the inner side while the vehicle 1 is turning is generated because of the camber angle and the toe angle.

FIG. 11 is a diagram illustrating the state of the inside turning wheel 3RL during turning. As shown in FIG. 11, the wheel support structure for the inside turning wheel 3RL of the second embodiment is a double wishbone type suspension, and includes a third upper arm 24L1 as a first arm having a first end coupled to the vehicle body 2 via a third upper bush 25L1 as a low-rigidity first shock-absorbing member and a second end coupled to the inside turning wheel 3RL side via a second camber angle changing device 4L, a fourth upper arm 24L2 as a second arm having a first end coupled to the vehicle body 2 via a fourth upper bush 25L2 as a high-rigidity second shock-absorbing member and a second end coupled to the inside turning wheel 3RL side via the second camber angle changing device 4L, a third lower arm 26L1 as a first arm having a first end coupled to the vehicle body 2 via a third lower bush 27L1 as a low-rigidity first shock-absorbing member and a second end coupled to the inside turning wheel 3RL side via the second camber angle changing device 4L, a fourth lower arm 26L2 as a second arm having a first end coupled to the vehicle body 2 via a fourth lower bush 27L2 as a high-rigidity second shock-absorbing member and a second end coupled to the inside turning wheel 3RL side via the second camber angle changing device 4L, and the second camber angle changing device 4L, which has a first side portion supported by the upper arms 24L and the lower arms 26L and a second side portion coupled to a support member that rotatably supports the inside turning wheel 3RL, for rotating the inside turning wheel 3RL about a second camber axis CL.

When the vehicle 1 is turning, the vehicle body 2 is tilted with the outer side of the vehicle 1 during turning being forced downward and the inner side of the vehicle 1 during turning being raised upward because the outer side of the vehicle 1 during turning receives a downward load G1 and the inner side of the vehicle 1 during turning receives an upward load G2 because of the roll R of the vehicle 1 as shown in FIG. 5.

Then, of the upper arms 24L of the wheel support structure for the inside turning wheel 3RL, the third upper arm 24L1 coupled to the low-rigidity third upper bush 25L1 of the upper arms 24L coupled to the vehicle body 2 is pulled up to a position above the fourth upper arm 24L2 coupled to the high-rigidity fourth upper bush 25L2. Of the lower arms 26L of the wheel support structure for the inside turning wheel 3RL, the third lower arm 26L1 coupled to the low-rigidity third lower bush 27L1 of the lower arms 26 coupled to the vehicle body 2 is pulled down to a position below the fourth lower arm 26L2 coupled to the high-rigidity fourth lower bush 27L2.

Thus, the front of the second camber axis CL of the inside turning wheel 3RL in the traveling direction f is positioned above the rear thereof.

As described above, the second camber axis CL extends generally in parallel with the road surface when the vehicle 1 is running steadily and the second camber axis CL of the inside turning wheel 3RL is inclined such that the front of the second camber axis CL in the traveling direction f is positioned above the rear thereof when the vehicle is turning. Thus, as shown in FIG. 4, when a camber angle is imparted to the inside turning wheel 3RL, a toe angle is also imparted thereto. As a result, a lateral force F2 that pushes the vehicle 1 toward the inner side while the vehicle 1 is turning, which is the difference between the lateral force due to the toe angle and the lateral force due to the camber angle, is generated.

Thus, in the vehicle of this embodiment, the lateral forces F1 and F2, which push the vehicle 1 toward the inner side while the vehicle 1 is turning, are applied to the outside turning wheel 3RR and the inside turning wheel 3RL, respectively, as shown in FIG. 5. The vehicle can, therefore, easily turn during turning. The constant presence of a toe angle leads to the problem of an increase in travel resistance. However, when a toe angle is imparted only when the load is changed because of the roll during turning as in the second embodiment, the turning performance can be improved without increasing the travel resistance. When the turn direction is opposite, the outside turning wheel 3RR and the inside turning wheel 3RL change their places.

In addition, the first upper arm 24R1, third upper arm 24L1, first lower arm 26R1 or third lower arm 26L1 having a first end coupled to the vehicle body side member at a position on the front side of the vehicle body 2 with respect to a corresponding wheel 3 and second end supporting the camber angle changing device 4, the second upper arm 24R2, fourth upper arm 24L2, second lower arm 24L2 or fourth lower arm 26L2 having a first end coupled to the vehicle body side member at a position on the rear side of the vehicle body 2 with respect to a corresponding wheel 3 and a second end supporting the camber angle changing device 4, the low-rigidity first upper bush 25R1, third upper bush 25L1, first lower bush 27R1 or third lower bush 27L1 coupling the first end of the first upper arm 24R1, third upper arm 24L1, first lower arm 26R1 or third lower arm 26L1 to the vehicle body 2, and the second upper bush 25R2, fourth upper bush 25L2, second lower bush 27R2 or fourth lower bush 27L2 coupling the first end of the first upper arm 24R1, third upper arm 24L1, first lower arm 26R1 or third lower arm 26L1 to the vehicle body 2 and having higher rigidity than the first upper bush 25R1, third upper bush 25L1, first lower bush 27R1 or third lower bush 27L1 are provided, the first camber axis CR of the outside turning wheel 3RR can be inclined, with a simple structure, such that the front of the first camber axis CR is positioned below the rear thereof when the vehicle 1 is turning. In addition, the second camber axis CL of the inside turning wheel 3RL can be inclined, with a simple structure, such that the front of the second camber axis CL is positioned above the rear thereof when the vehicle 1 is turning.

FIG. 12 is a plan view of the outside turning wheel 3RR illustrating another embodiment, and FIG. 13 is a plan view of the outside turning wheel 3RR illustrating yet another embodiment.

In the embodiment shown in FIG. 1 to FIG. 11, an example in which the camber angle C extends in parallel with the traveling direction f when the vehicle 1 is running steadily, i.e., when the vehicle 1 is traveling straight on a flat road, is shown. Taking the outside turning wheel 3RR as an example, however, the first camber axis CR may extend not in parallel with but across the traveling direction when the vehicle is running steadily as shown in FIG. 12. Again in this case, the front of the first camber axis CR in the traveling direction f is positioned below the rear thereof when the vehicle is turning and when the wheel serves as an outside turning wheel 3RR.

Alternatively, the first camber axis CR of the outside turning wheel 3RR may extend not in parallel with but across the traveling direction and the widthwise centerline of the outside turning wheel 3RR may extend not in parallel with but across the traveling direction when the vehicle is running steadily as shown in FIG. 13. In addition, a predetermined camber angle may be imparted in advance to the outside turning wheel 3RR when the vehicle is running steadily. Again in this case, the front of the first camber axis CR in the traveling direction f is naturally positioned below the rear thereof when the vehicle is turning and the wheel serves as an outside turning wheel 3RR.

## Claims

1. A vehicle, including: a vehicle body, a wheel supported by the vehicle body, and a camber angle changing device, having a first side portion supported on a vehicle body side member and a second side portion supported on a wheel side member, for allowing the wheel side member to rotate about a camber axis relative to the vehicle body member, the vehicle **characterized in that**
the camber axis extends generally in parallel with the road surface when the vehicle is running steadily and the camber axis of an outside turning wheel is inclined such that the front of the camber axis is positioned below the rear thereof when the vehicle is turning.

2. The vehicle according to claim 1, **characterized in that**
the camber axis of an inside turning wheel is inclined such that the front of the camber axis is positioned above the rear thereof when the vehicle is turning.

3. The vehicle according to claim 1 or 2, **characterized by** further comprising
a trailing arm having a first end coupled to the vehicle body? and a second end supporting the camber angle changing device at a position on the rear side of the first end.

4. The vehicle according to claim 1 or 2, **characterized by** further comprising
a first arm having a first end coupled to the vehicle body side member at a position on the front side of the vehicle body with respect to the wheel and a second end supporting the camber angle changing device,
a second arm having a first end coupled to the vehicle body side member at a position on the rear side of the vehicle body with respect to the wheel and a second end supporting the camber angle changing device,
a low-rigidity first shock-absorbing member coupling the first end of the first arm to the vehicle body, and
a second shock-absorbing member coupling the first end of the second arm to the vehicle body and having a higher rigidity than the first shock-absorbing member.
